# EUROPEAN PATENT APPLICATION

(11) **EP 4 568 394 A1**
(43) Date of publication of application: **11.06.2025**
(21) Application number: 23849452.0
(22) Date of filing: 02.08.2023
(51) Int. Cl.: H04W 72/12

(54) **DATA TRANSMISSION PROCESSING METHOD AND APPARATUS, TERMINAL, AND NETWORK SIDE DEVICE**

(30) Priority: 05.08.2022 CN 202210940130
(71) Applicant: Vivo Mobile Communication Co., Ltd., Dongguan, Guangdong 523863 (CN)
(72) Inventor: JIANG, Lei, Dongguan, Guangdong 523863 (CN); WANG, Lihui, Dongguan, Guangdong 523863 (CN)
(74) Representative: Winter, Brandl - Partnerschaft mbB
(86) International application number: PCT/CN2023/110692
(87) International publication number: WO 2024/027747

(57) **Abstract**

Disclosed are a method and apparatus for transmitting and processing data, a terminal, and a network side device, which belong to the field of communication. The method includes: transmitting, by a terminal, capability information; and executing a first behavior by the terminal in a case that the capability information includes a capability of supporting a subband full duplex (SBFD) and a capability of supporting demodulation reference signal (DMRS) bundling. The first behavior includes any one of the following: the terminal does not expect that the network side device configures both SBFD and DMRS bundling; in a case that the terminal is configured with both SBFD and DMRS bundling, at least two uplink consecutive time units include a first time unit and a second time unit, and the first time unit and the second time unit have different first uplink transmission parameters, an actual time domain window in a first nominal time domain window of first transmission is determined; and in a case that the terminal is configured with both SBFD and DMRS bundling, and the first time unit and the second time unit have different first uplink transmission parameters, the terminal does not expect that at least two consecutive time units applying DMRS bundling include the first time unit and the second time unit.

## Description

### CROSS-REFERENCE TO RELATED APPLICATIONS

The disclosure claims the priority to Chinese patent application No.202210940130.8 filed on August 5, 2022, which is incorporated in its entirety herein by reference.

### TECHNICAL FIELD

The disclosure belongs to the technical field of communication, and particularly relates to a method and apparatus for transmitting and processing data, a terminal, and a network side device.

### BACKGROUND

With the development of communication technologies, capabilities supported by a terminal keep increasing. When the terminal supports both a capability of operation in a subband full duplex (SBFD) configuration and a capability of bundling a demodulation reference signal (DMRS), SBFD operation probably destroy power consistency and phase continuity, resulting in DMRS bundling failure. Thus, in the related art, when the terminal has capabilities of supporting both SBFD operation and DMRS bundling, communication reliability will be reduced.

### SUMMARY

Embodiments of the disclosure provide a method and apparatus for transmitting and processing data, a terminal, and a network side device, which can solve a problem that communication reliability is reduced when a terminal supports capabilities of both SBFD and DMRS bundling.

A first aspect provides a method for transmitting and processing data. The method includes:
transmitting, by a terminal, capability information to a network side device; and
executing a first behavior by the terminal in a case that the capability information includes a capability of supporting a subband full duplex (SBFD) and a capability of supporting demodulation reference signal (DMRS) bundling.

The first behavior includes any one of the following:
the terminal does not expect that the network side device configures both SBFD and DMRS bundling;
in a case that the terminal is configured with both SBFD and DMRS bundling, at least two uplink consecutive time units include a first time unit and a second time unit, and the first time unit and the second time unit have different first uplink transmission parameters, the first time unit is used as an event that destroys power consistency and phase continuity, and an actual time domain window in a first nominal time domain window of first transmission is determined; and
in a case that the terminal is configured with both SBFD and DMRS bundling, and the first time unit and the second time unit have different first uplink transmission parameters, the terminal does not expect that at least two consecutive time units applying DMRS bundling include both the first time unit and the second time unit.

The first nominal time domain window includes the first time unit and the second time unit. The first time unit is a time unit configured with SBFD. The second time unit is a time unit not configured with SBFD. The first uplink transmission parameters include at least one of power and a spatial relation.

A second aspect provides a method for transmitting and processing data. The method includes:
receiving, by a network side device, capability information from a terminal; and
transmitting, in a case that the capability information includes a capability of supporting a subband full duplex (SBFD) and a capability of supporting demodulation reference signal (DMRS) bundling, a first configuration for configuring SBFD or a second configuration for configuring DMRS bundling to the terminal by the network side device.

A third aspect provides an apparatus for transmitting and processing data. The apparatus includes:
a first transmission module configured to transmit capability information to a network side device; and
an execution module configured to execute a first behavior in a case that the capability information includes a capability of supporting a subband full duplex (SBFD) and a capability of supporting demodulation reference signal (DMRS) bundling.

The first behavior includes any one of the following:
a terminal does not expect that the network side device configures both SBFD and DMRS bundling;
in a case that the terminal is configured with both SBFD and DMRS bundling, at least two uplink consecutive time units include a first time unit and a second time unit, and the first time unit and the second time unit have different first uplink transmission parameters, the first time unit is used as an event that destroys power consistency and phase continuity, and an actual time domain window in a first nominal time domain window of first transmission is determined; and
in a case that the terminal is configured with both SBFD and DMRS bundling, and the first time unit and the second time unit have different first uplink transmission parameters, the terminal does not expect that at least two consecutive time units applying DMRS bundling include both the first time unit and the second time unit.

The first nominal time domain window includes the first time unit and the second time unit. The first time unit is a time unit configured with SBFD. The second time unit is a time unit not configured with SBFD. The first uplink transmission parameters include at least one of power and a spatial relation.

A fourth aspect provides an apparatus for transmitting and processing data. The apparatus includes:
a reception module configured to receive capability information from a terminal; and
a second transmission module configured to transmit, in a case that the capability information includes a capability of supporting a subband full duplex (SBFD) and a capability of supporting demodulation reference signal (DMRS) bundling, a first configuration for configuring SBFD or a second configuration for configuring DMRS bundling to the terminal.

A fifth aspect provides a terminal. The terminal includes a processor and a memory. The memory stores a program or an instruction runnable on the processor. When the program or the instruction is executed by the processor, steps of the method according to the first aspect are implemented.

A sixth aspect provides a terminal. The terminal includes a processor and a communication interface. The communication interface is configured to transmit capability information to a network side device. The processor is configured to execute a first behavior in a case that the capability information includes a capability of supporting a subband full duplex (SBFD) and a capability of supporting demodulation reference signal (DMRS) bundling. The first behavior includes any one of the following: a terminal does not expect that the network side device configures both SBFD and DMRS bundling; in a case that the terminal is configured with both SBFD and DMRS bundling, at least two uplink consecutive time units include a first time unit and a second time unit, and the first time unit and the second time unit have different first uplink transmission parameters, the first time unit is used as an event that destroys power consistency and phase continuity, and an actual time domain window in a first nominal time domain window of first transmission is determined; and in a case that the terminal is configured with both SBFD and DMRS bundling, and the first time unit and the second time unit have different first uplink transmission parameters, the terminal does not expect that at least two consecutive time units applying DMRS bundling include both the first time unit and the second time unit. The first nominal time domain window includes the first time unit and the second time unit. The first time unit is a time unit configured with SBFD. The second time unit is a time unit not configured with SBFD. The first uplink transmission parameters include at least one of power and a spatial relation.

A seventh aspect provides a network side device. The network side device includes a processor and a memory. The memory stores a program or an instruction runnable on the processor. When the program or the instruction is executed by the processor, steps of the method according to the second aspect are implemented.

An eighth aspect provides a network side device. The network side device includes a processor and a communication interface. The communication interface is configured to receive capability information from a terminal; and transmit, in a case that the capability information includes a capability of supporting a subband full duplex (SBFD) and a capability of supporting demodulation reference signal (DMRS) bundling, a first configuration for configuring SBFD or a second configuration for configuring DMRS bundling to the terminal.

A ninth aspect provides a communication system. The communication system includes: a terminal and a network side device. The terminal is configured to execute steps of the method for transmitting and processing data according to the first aspect. The network side device is configured to execute steps of the method for transmitting and processing data according to the second aspect.

A tenth aspect provides a readable storage medium. The readable storage medium stores a program or an instruction. When the program or the instruction is executed by a processor, steps of the method according to the first aspect are implemented, and alternatively, steps of the method according to the second aspect are implemented.

An eleventh aspect provides a chip. The chip includes a processor and a communication interface. The communication interface is coupled to the processor. The processor is configured to run a program or an instruction, such that steps of the method according to the first aspect are implemented, and alternatively, steps of the method according to the second aspect are implemented.

A twelfth aspect provides a computer program/program product. The computer program/program product is stored in a storage medium. The computer program/program product is executed by at least one processor, such that steps of the method according to the first aspect are implemented, and alternatively, steps of the method according to the second aspect are implemented.

In the embodiment of the disclosure, the terminal transmits the capability information to the network side device; and the terminal executes the first behavior in the case that the capability information includes the capability of supporting the subband full duplex (SBFD) and the capability of supporting demodulation reference signal (DMRS) bundling. The first behavior includes any one of the following: the terminal does not expect that the network side device configures both SBFD and DMRS bundling; in a case that the terminal is configured with both SBFD and DMRS bundling, at least two uplink consecutive time units include a first time unit and a second time unit, and the first time unit and the second time unit have different first uplink transmission parameters, the first time unit is used as an event that destroys power consistency and phase continuity, and an actual time domain window in a first nominal time domain window of first transmission is determined; and in a case that the terminal is configured with both SBFD and DMRS bundling, and the first time unit and the second time unit have different first uplink transmission parameters, the terminal does not expect that at least two consecutive time units applying DMRS bundling include both the first time unit and the second time unit. The first nominal time domain window includes the first time unit and the second time unit. The first time unit is a time unit configured with SBFD. The second time unit is a time unit not configured with SBFD. The first uplink transmission parameters include at least one of power and a spatial relation. In this way, the situation that SBFD operation destroys power consistency and phase continuity, resulting in DMRS bundling failure can be avoided. Thus, the embodiment of the disclosure can improve communication reliability. Meanwhile, the embodiment of the disclosure can conduct DMRS bundling by the terminal while supporting SBFD operation, thus improving accuracy of channel evaluation and enhancing communication performance.

### BRIEF DESCRIPTION OF THE DRAWINGS

FIG. 1 is a schematic structural diagram of a network applied to the disclosure;
FIG. 2 is a flow diagram of a method for transmitting and processing data according to the disclosure;
FIG. 3 to FIG. 8 are illustrative diagrams of a transmission scene of a method for transmitting and processing data according to the disclosure;
FIG. 9 is a flow diagram of another method for transmitting and processing data according to the disclosure;
FIG. 10 is a structural diagram of an apparatus for transmitting and processing data according to the disclosure;
FIG. 11 is a structural diagram of another apparatus for transmitting and processing data according to the disclosure;
FIG. 12 is a structural diagram of a communication device according to the disclosure;
FIG. 13 is a structural diagram of a terminal according to the disclosure; and
FIG. 14 is a structural diagram of a network side device according to the disclosure.

### DETAILED DESCRIPTION

Technical solutions in embodiments of the disclosure will be clearly described below with reference to accompanying drawings in the embodiments of the disclosure. Obviously, the embodiments described are some embodiments rather than all embodiments of the disclosure. Based on the embodiments of the disclosure, all other embodiments obtained by those of ordinary skill in the art should fall within the protection scope of the disclosure.

In the description and claims of the disclosure, terms such as "first" and "second" are intended to distinguish between similar objects but are not used to indicate a specific order or sequence. It should be understood that terms used in this way can be interchanged under appropriate circumstances, such that the embodiment of the disclosure can be implemented in a sequence other than those illustrated or described herein. In addition, the objects distinguished by "first" or "second" are generally objects of a same type with a number of objects unlimited. For example, a first object can indicate one or more first objects. In addition, "and/or" in the description and the claims represents at least one of connected objects, and the character "/" generally represents an "or" relation between two associated context objects.

It is worth pointing out that the technology described in the embodiment of the disclosure is not limited to a long term evolution (LTE)/LTE-advanced (LTE-A) system, and can also be used in other radio communication systems, such as code division multiple access (CDMA), time division multiple access (TDMA), frequency division multiple access (FDMA), orthogonal frequency division multiple access (OFDMA), single-carrier frequency division multiple access (SC-FDMA), and other systems. The terms "system" and "network" in the embodiments of the disclosure are generally used interchangeably, and the described technology can be applied to the systems and radio technologies described above, or applied to other systems and radio technologies. The following description describes a new radio (NR) system for illustration. NR terms are used in most of the following description, but the technologies can be applied to applications other than NR system applications, such as a 6^{th} generation (6G) communication system.

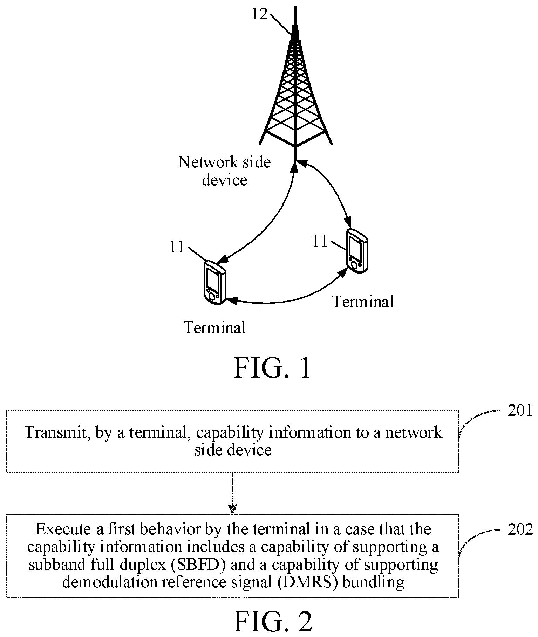

FIG. 1 shows a block diagram of a radio communication system applied to an embodiment of the disclosure. The radio communication system includes a terminal 11 and a network side device 12. The terminal 11 may be a mobile phone, a tablet personal computer, a laptop computer or a notebook computer, a personal digital assistant (PDA), a palmtop computer, a netbook, an ultra-mobile personal computer (UMPC), a mobile Internet device (MID), an augmented reality (AR)/virtual reality (VR) device, a robot, a wearable device, vehicle user equipment (VUE), pedestrian user equipment (PUE), a smart home appliance (home equipment having a radio communication function, such as a refrigerator, a television, a washing machine or a furniture), and terminal side devices such as a game machine, a personal computer (PC), a teller machine or a self-service machine. The wearable device includes: a smart watch, a smart band, a smart headset, smart glasses, smart jewelry (a smart bracelet, a smart chain bracelet, a smart ring, a smart necklace, a smart anklet, a smart ankle chain, etc.), a smart wrist strap, a smart garment, etc. It should be noted that a specific type of the terminal 11 is not limited by the embodiment of the disclosure. The network side device 12 may include an access network device or a core network device. The access network device may alternatively be referred to as a radio access network device, a radio access network (RAN), a radio access network function, or a radio access network unit. The access network device may include a base station, a wireless local area network (WLAN) access point, a wireless fidelity (WiFi) node, etc. The base station may be referred to as a node B, an evolution node B (eNB), an access point, a base transceiver station (BTS), a radio base station, a radio transceiver, a basic service set (BSS), an extended service set (ESS), a home B node, a home evolution type B node, a transmitting receiving point (TRP), or any other suitable term in the art, as long as same technical effects are achieved. The base station is not limited to a particular technical vocabulary. It should be noted, in the embodiment of the disclosure, only a base station in an NR system is described as an example, and a specific type of the base station is not limited.

For convenience of understanding, some contents involved in the embodiments of the disclosure will be described below.

A, slot format.

In LTE, uplink and downlink configurations are in units of slots or subframes. The uplink and downlink configurations include 7 configurations of an LTE time division duplex (TDD).

In new radio (NR), the uplink and downlink configurations are more flexible with a symbol as granularity. A specific configuration process is as follows:
1, Semi-static uplink and downlink configurations of a cell are first configured.

A high layer provides a parameter *TDD-UL-DL-ConfigurationCommon.* For example, the parameter includes reference subcarrier spacing (SCS) u and a pattern 1 (pattern 1), where u is indicated by a reference subcarrier spacing configuration (reference SCS configuration), and the pattern 1 further includes the following contents:
a slot configuration period P ms;
a number of slots with only downlink symbols Dslots;
a number of downlink symbols Dsym;
a number of slots with only uplink symbols Uslots; and
a number of uplink symbols Usym.

A configuration period P=0.625 ms is only valid for 120 kHz subcarrier spacing, P=1.25 ms is only valid for 60 kHz and 120 kHz subcarrier spacing, and P=2.5 ms is only valid for 30 kHz, 60 kHz, and 120 kHz subcarrier spacing. In this case, for a configuration period, a number of slots included in the period may be learned through a formula S=P*2u. In the slots, first Dslots slots are downlink slots, followed by Dsym downlink symbols, followed by Usym uplink symbols, and finally followed by Uslots uplink slots. After uplink and downlink configurations in S slots, a flexible symbol X remains.

If parameters are given to both the pattern 1 and a pattern 2, two different slot formats may be successively configured, and a parameter form in the pattern 2 is similar to that in the pattern 1.

2, Cell-specific uplink and downlink configurations are then configured.

If a high layer parameter *TDD-UL-DL-ConfigDedicated* further provided based on configuration of *TDD-UL-DL-ConfigurationCommon,* the parameter may be configured with a flexible symbol configured by the parameter *TDD-UL-DL-ConfigurationCommon.* That is, uplink and downlink symbols configured in *TDD-UL-DL-ConfigurationCommon* may not be changed, but the flexible symbol may be rewritten by *TDD-UL-DL-ConfigurationDedicated.*

The parameter provides a series of slot configurations. For each slot configuration, a slot index and a symbol configuration are provided.

3, Uplink and downlink configurations of dynamic downlink control information (DCI) are implemented.

The uplink and downlink configurations implemented by the dynamic DCI are implemented through a DCI format 2-0, or directly through uplink and downlink data scheduling of DCI formats 0-0, 0-1, 1-0, and 1-1. The DCI format 2-0 is specially used as a slot format indicator (SFI). The SFI is mainly configured based on a slot format that may be supported in a single slot, to implement a periodic frame structure. That is, by starting from reception of the DCI format 2-0, slots in a monitoring period of a continuous physical downlink control channel (PDCCH) are configured based on an instruction of the SFI in the DCI. A maximum number of formats supported by the single slot is 256, and 56 formats are standardized.

An intuitive method is as follows: a base station configures an uplink transmission resource and a downlink transmission resource in frequency division on a segment of contiguous resources, for example, a downlink (DL) bandwidth part (BWP) or an uplink (UL) BWP. That is, on the DL BWP, the base station configures some resources as uplink transmission resources, or on the UL BWP, a gNB configures some resources as downlink resources. In this way, at a same moment, the gNB may not only conduct uplink reception (for example, receive data of a terminal 1), but also conduct downlink transmission (for example, transmit data to a terminal 2). A terminal selects only some resources for transmission, that is, transmission or reception. The duplex mode may be referred to as SBFD.

B, DMRS bundling.

For a repetition of a physical uplink shared channel (PUSCH) of type A or type B, transmission power of the terminal may be adjusted for each repetition or transmission in each slot. When the terminal reports a DMRS bundling capability, and the base station configures DMRS bundling for the terminal, the terminal may implement DMRS bundling if keeping transmission power consistency and phase continuity of each repetition in a nominal time domain window (TDW). In addition, for a transport block (TB) transmitted in a plurality of slots or a physical uplink control channel (PUCCH) repeatedly transmitted, the terminal also needs to ensure transmission power consistency and phase continuity of transmission in the TDW, so as to implement DMRS bundling. Some events existent in the related art may destroy power consistency and phase continuity. In this case, the terminal may determine an actual TDW based on the event in the nominal TDW, and keep power consistency and phase continuity in the actual TDW, so as to implement DMRS bundling.

C, sensing-based power adjustment.

In an SBFD slot, the terminal is subject to complex interference, for example, interference including inter-band, intra-band inter-cell, and intra-cell, so the terminal may determine a power level of an interference through detection before transmission. When the interference exceeds a predetermined threshold, the terminal may ensure transmission performance by adjusting transmission power, and for example, may increase a probability of correct demodulation by increasing transmission power, or reduce interference to a surrounding device by decreasing transmission power. The SBFD slot may be understood as a slot with SBFD or a slot using SBFD. For example, if a network side device configures SBFD for some slots, the slots may be referred to as SBFD slots.

When SBFD is introduced, both an uplink resource and a downlink resource exist in a slot/symbol of SBFD, and only an uplink resource exists in a slot or symbol (UL only slot/symbol) for uplink. Considering that interference on an uplink subband (UL subband) in the SBFD slot/symbol is different from that in the UL only slot/symbol, uplink transmission power in the SBFD slot/symbol, a selected spatial domain filter, etc. may be different. In this case, if the terminal is configured with DMRS bundling, and the TDW includes a UL slot only and an SBFD slot/symbol, requirements for power consistency and phase continuity may be destroyed. Thus, a method for transmitting and processing data according to the disclosure is provided.

The method for transmitting and processing data according to the embodiment of the disclosure will be described in detail below through some embodiments and their application scenes with reference to the accompanying drawings.

With reference to FIG. 2, an embodiment of the disclosure provides a method for transmitting and processing data. As shown in FIG. 2, the method for transmitting and processing data includes the following steps:
Step 201, a terminal transmits capability information to a network side device.
Step 202, the terminal executes a first behavior in a case that the capability information includes a capability of supporting a subband full duplex (SBFD) and a capability of supporting demodulation reference signal (DMRS) bundling.

The first behavior includes any one of the following:
Behavior 1, the terminal does not expect that the network side device configures both SBFD and DMRS bundling.
Behavior 2, in a case that the terminal is configured with both SBFD and DMRS bundling, at least two uplink consecutive time units include a first time unit and a second time unit, and the first time unit and the second time unit have different first uplink transmission parameters, the first time unit is used as an event that destroys power consistency and phase continuity, and an actual time domain window in a first nominal time domain window of first transmission is determined.
Behavior 3, in a case that the terminal is configured with both SBFD and DMRS bundling, and the first time unit and the second time unit have different first uplink transmission parameters, the terminal does not expect that at least two consecutive time units applying DMRS bundling include both the first time unit and the second time unit.

The first nominal time domain window includes the first time unit and the second time unit. The first time unit is a time unit configured with an SBFD. The second time unit is a time unit not configured with SBFD. The first uplink transmission parameters include at least one of power and a spatial relation.

In an embodiment of the disclosure, the time unit may include at least one of the following: at least one slot and at least one symbol. For example, if the network side device configures an SBFD on a specific slot or symbol, it may be assumed, considered, or determined that the slot or symbol is a slot or symbol configured with an SBFD.

It should be noted that the first transmission of the terminal may include one or more nominal time domain windows. If an event that destroys power consistency and phase continuity occurs in a nominal time domain window, the nominal window may be re-split into an actual time domain window, and the actual time domain window split includes only a non-SBFD slot/symbol (that is, a full uplink/flexible (flexible) slot/symbol) or includes only an SBFD slot/symbol. The full uplink slot/symbol may be understood to be configured only for uplink transmission. The slot/symbol including only an SBFD may be understood as a slot/symbol having an SBFD (that is, the first time unit).

Optionally, a time unit not configured with SBFD may include a non-SBFD slot/symbol (that is, a full uplink or flexible slot/symbol). The terminal capability of supporting an SBFD may be understood as the terminal capability of supporting operation under an SBFD configuration. That is, the terminal supports SBFD operation.

Optionally, for the behavior 1, it may be understood that a terminal agreed by a protocol does not expect that the network side device configures both SBFD and DMRS bundling. In this case, the network side device may configure SBFD or DMRS bundling for the terminal in a case that the terminal supports a capability of a subband full duplex (SBFD) and a capability of demodulation reference signal (DMRS) bundling. For example, the network side device transmits a first configuration for configuring SBFD or a second configuration for configuring DMRS bundling to the terminal. In this way, the terminal may execute only SBFD or DMRS bundling. Thus, the situation that SBFD operation destroys power consistency and phase continuity, resulting in DMRS bundling failure because the network side device configures both SBFD and DMRS bundling for the terminal can be avoided. Thus, the embodiment of the disclosure can improve communication reliability.

Optionally, for the behavior 2, the terminal splits the first nominal time domain window into the actual time domain window, and power consistency and phase continuity are ensured in each actual time domain window. Thus, the terminal may conduct DMRS bundling while supporting SBFD operation, thus improving accuracy of channel evaluation and enhancing communication performance.

Optionally, for the behavior 3 that may be understood as behavior information agreed by the protocol, when the network side device configures both SBFD and DMRS bundling for the terminal based on information agreed by the protocol, DMRS bundling may be only in the first time unit or only in the second time unit. Thus, power consistency and phase continuity cannot be destroyed. The terminal may conduct DMRS bundling while supporting SBFD operation, such that the embodiment of the disclosure improves accuracy of channel evaluation and enhances communication performance. Alternatively, the network side device may not configure both SBFD and DMRS bundling, such that the situation that SBFD operation destroys power consistency and phase continuity, resulting in DMRS bundling failure can be avoided. Thus, the embodiment of the disclosure can improve communication reliability.

In the embodiment of the disclosure, the terminal transmits the capability information to the network side device; and the terminal executes the first behavior in the case that the capability information includes the capability of supporting the subband full duplex (SBFD) and the capability of supporting demodulation reference signal (DMRS) bundling. The first behavior includes any one of the following: the terminal does not expect that the network side device configures both SBFD and DMRS bundling; in a case that the terminal is configured with both SBFD and DMRS bundling, the at least two uplink consecutive time units include the first time unit and the second time unit, and the first time unit and the second time unit have different first uplink transmission parameters, the first time unit is used as the event that destroys power consistency and phase continuity, and the actual time domain window in the first nominal time domain window of the first transmission is determined; and in a case that the terminal is configured with both SBFD and DMRS bundling, and the first time unit and the second time unit have different first uplink transmission parameters, the terminal does not expect that the at least two consecutive time units applying DMRS bundling include both the first time unit and the second time unit. The first nominal time domain window includes the first time unit and the second time unit. The first time unit is a time unit configured with an SBFD. The second time unit is a time unit not configured with SBFD. The first uplink transmission parameters include at least one of power and a spatial relation. In this way, the situation that SBFD operation destroys power consistency and phase continuity, resulting in DMRS bundling failure can be avoided. Thus, the embodiment of the disclosure can improve communication reliability. Meanwhile, the embodiment of the disclosure can conduct DMRS bundling by the terminal while supporting SBFD operation, thus improving accuracy of channel evaluation and enhancing communication performance.

Optionally, in some embodiments, the first transmission includes at least one of the following:
physical uplink shared channel (PUSCH) repetition type A scheduled by downlink control information (DCI);
PUSCH repetition type A with a configured grant;
PUSCH repetition type B;
a transport block transmitted in at least two slots; and
physical uplink control channel (PUCCH) repetition.

Optionally, in some embodiments, in a case that the terminal is configured with SBFD, the method further includes the following step:
the terminal determines a second behavior. The second behavior includes any one of the following:
a power adjustment operation is executed based on first detection in a first time period; and
no power adjustment is conducted based on first detection in a first time period.

The first detection is used to determine a power level of an interference. The first time period includes only the first time unit.

In the embodiment of the disclosure, the first detection may be similar to detection in listen before talk (LBT). In response to detecting that interference exceeds a predetermined threshold, the terminal may ensure transmission performance by adjusting transmission power, and for example, may increase a probability of correct demodulation by increasing transmission power, or reduce interference to a surrounding device by decreasing transmission power.

Optionally, a position of the first detection satisfies at least one of the following conditions:
the first detection is located before a first allocated first resource, and alternatively, the first detection is located before a first actually used first resource;
the first detection is located before a primary second nominal time domain window of the first transmission, or before a primary first actual time domain window of the first transmission;
the first detection is located before a first resource allocated in a primary second nominal time domain window of the first transmission, or before a first resource allocated in a primary first actual time domain window of the first transmission;
the first detection is located before each second nominal time domain window of the first transmission, or before each first actual time domain window of the first transmission; and
the first detection is located before a first resource allocated in each second nominal time domain window of the first transmission, or before a first resource allocated in each first actual time domain window of the first transmission.

The first actual time domain window is an actual time domain window including the first time unit. The first actual time domain window is located in the first time period. The first resource is a resource of the first transmission. The second nominal time domain window is located in the first time period.

In the embodiment of the disclosure, the case that the first detection is located before the first allocated first resource may be understood as a case that an end position of the first detection is located before the first allocated first resource. Optionally, the first detection may be located inside or outside a nominal time domain window where the first allocated first resource is located, which is not further limited herein.

The case that the first detection is located before the first actually used first resource may be understood as a case that an end position of the first detection is located before the first actually used first resource. Optionally, the first detection may be located inside or outside a nominal time domain window where the first actually used first resource is located, which is not further limited herein.

The case that the first detection is located before a first resource allocated in a primary second nominal time domain window of the first transmission may be understood as a case that an end position of the first detection is located before the first resource allocated in the primary second nominal time domain window of the first transmission. The first detection may be located within or outside the primary second nominal time domain window, which is not further limited herein.

In the embodiment of the disclosure, different detection behaviors correspond to different positions of the first detection. In the embodiment of the disclosure, a specific detection behavior may be understood to include at least one of the following:
detection is conducted before a start of the first allocated first resource or the first actually used first resource;
detection is conducted before a start of the primary second nominal time domain window or the primary first actual time domain window;
detection is conducted before a start of the first resource allocated in the primary second nominal time domain window or the first resource allocated in the primary first actual time domain window;
detection is conducted before a start of each second nominal time domain window or each first actual time domain window; and
detection is conducted before a start of a first resource allocated in each second nominal time domain window or a first resource allocated in each first actual time domain window.

Optionally, in some embodiments, the first time period is located between the two adjacent first detection, and includes only a first actual window and/or the second nominal time domain window.

In the embodiment of the disclosure, power adjustment may be conducted on all transmission before next first detection according to a detection result of current first detection. For example, in some embodiments, a start moment of the first time period is located after an end moment of the former of two adjacent first detection, and an end moment of the first time period is located before a start moment of the latter of two adjacent first detection. In some embodiments, the start moment of the first time period is a start moment of the former of the two adjacent first detection (or is located before the start moment of the former of the two adjacent first detection), and the end moment of the first time period is an end moment of the latter of the two adjacent first detection (or is located after the end moment of the latter of the two adjacent first detection).

For better understanding of the disclosure, detailed description will be provided below through some examples.

When an SBFD slot is used as an event that destroys power consistency and phase continuity, it is assumed that downlink reception or downlink monitoring is conducted in an unpaired spectrum based on uplink and downlink configuration parameters of SBFD, and any two consecutive transmission uses different starting physical resource blocks (PRB), different spatial relations, or different power control parameters or uplink timing.

Optionally, the uplink and downlink configuration parameters of the SBFD include: *xdd-UL-DL-ConfigurationCommon* and *xdd-UL-DL-ConfigurationDedicated.*

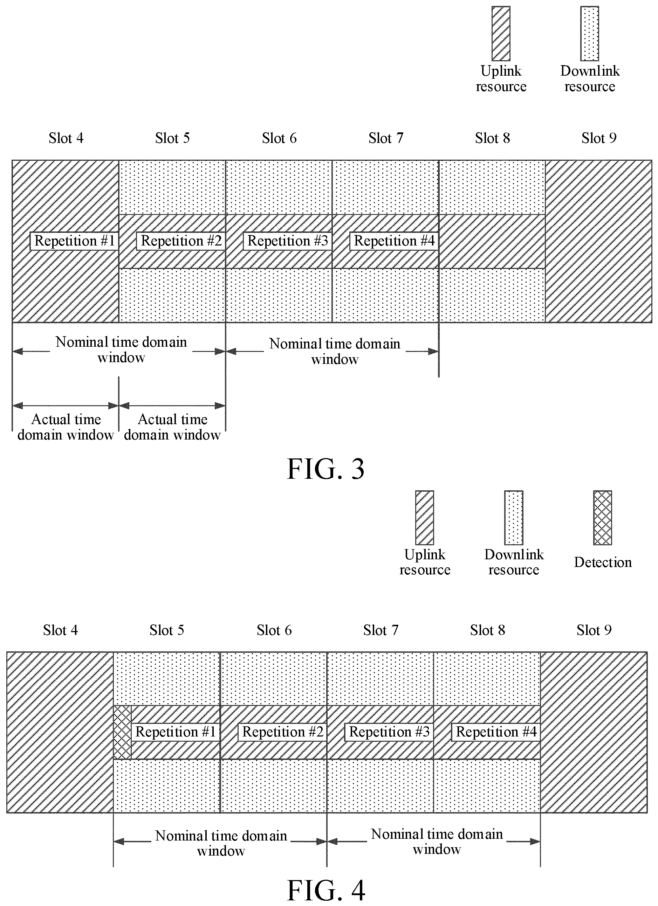

Based on the above scene, as shown in FIG. 3, the first transmission includes 4 repetitions. According to a time domain window length (*TimeDomainWindowLength*), maximum DMRS bundling duration (*maxDMRS-BundlingDuration*) and other parameters, two nominal time domain windows (nominal TDWs) are obtained. A first nominal TDW includes a UL only slot/symbol and an SBFD slot/symbol. Considering that the SBFD operation destroys power consistency and phase continuity, the first nominal TDW is further divided into two actual TDWs, bounded by a UL only slot/symbol boundary and an SBFD slot/symbol boundary. In this case, each nominal TDW or actual TDW includes only the UL only slot/symbol or only the SBFD slot/symbol.

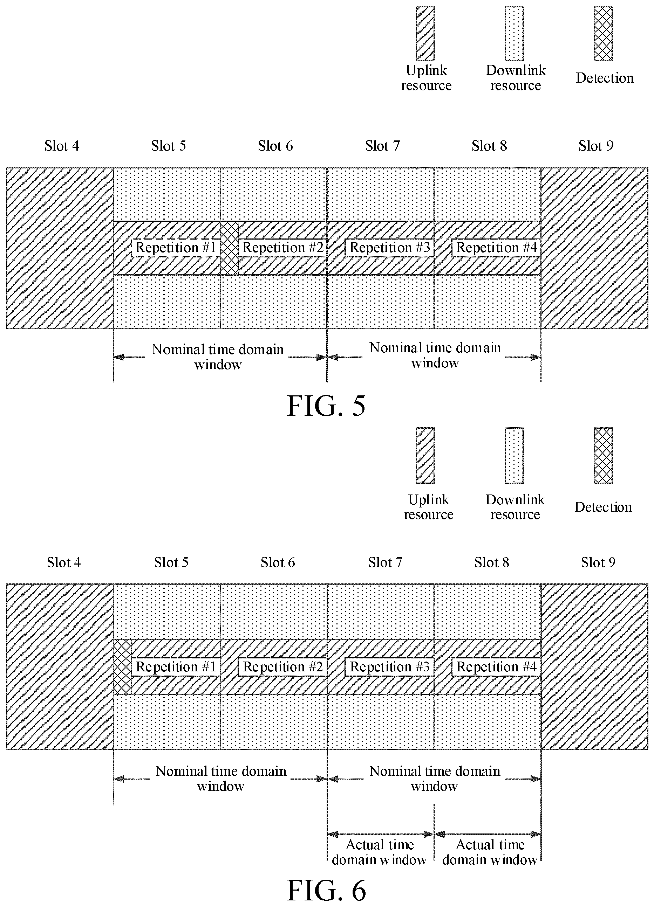

Optionally, it is assumed that the first transmission has 4 repetitions, and a first repetition is discarded (for example, dropped). A position of detection is located before the first allocated first resource or the first actually used first resource. When available slot counting (*vailableSlotCounting*) is not enabled or configured, the position of detection is located before the first allocated first resource, that is, before the first repetition, as shown in FIG. 4. When available slot counting (*vailableSlotCounting*) is enabled or configured, the position of detection is located before the first actually used first resource, that is, before a second repetition, as shown in FIG. 5. The first resource may be understood as a transmission resource of all repetitions.

Optionally, it is assumed that the first transmission has 4 repetitions, each nominal TDW includes two repetitions, and a second nominal TDW is further split into two actual TDWs.

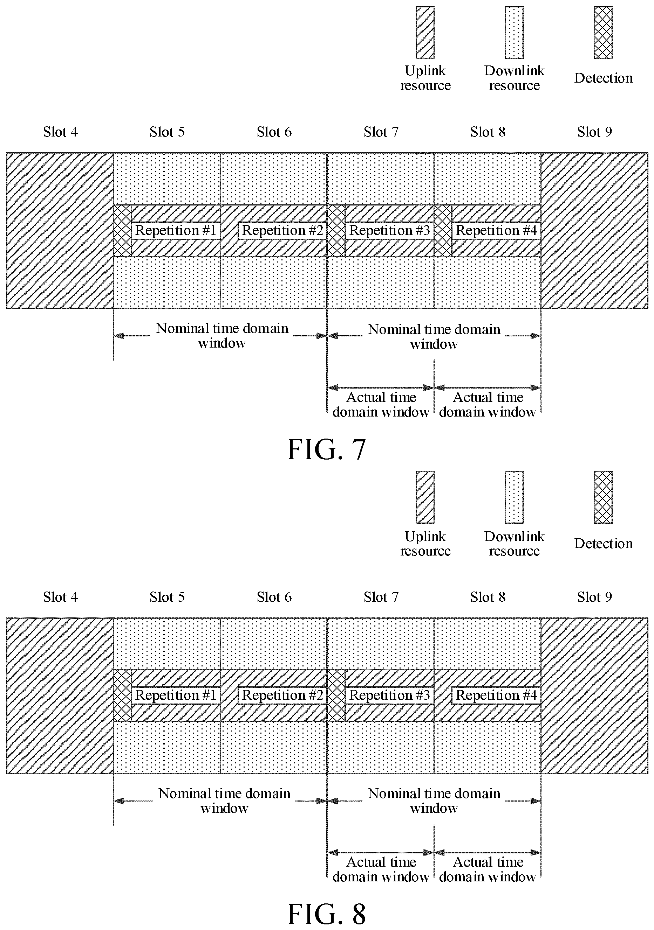

For detection of the TDW, the following methods may be as follows:
Method 1: detection is conducted only before the first nominal TDW, and detection is not conducted before remaining nominal/actual TDWs; and alternatively, detection is conducted only before a first repetition of the first nominal TDW, and detection is not conducted before remaining repetitions, as shown in FIG. 6.
Method 2: detection is conducted before each nominal or actual TDM. As the second nominal TDM is split into two actual TDWs, detection needs to be conducted before each actual TDW; and alternatively, detection is conducted before a first repetition of each nominal or actual TDM. As the second nominal TDM is split into two actual TDWs, detection needs to be conducted before a first repetition of each actual TDW, as shown in FIG. 7.
Method 3: detection is conducted only before each nominal TDW; and alternatively, detection is conducted only before a first repetition of each nominal TDW, as shown in FIG. 8.

Optionally, a power adjustment method after detection may be one of the following methods:
Method 1: power adjustment is uniformly conducted on all transmission before next detection. For example, in FIG. 4 or FIG. 5, after detection is completed, power adjustment is uniformly conducted on repetitions #2, #3, and #4. In FIG. 6, after first detection is completed, power adjustment is conducted on repetitions #1 and #2. After second detection is completed, power adjustment is conducted on a repetition #3. After third detection is completed, power adjustment is conducted on a repetition #4. The rest may be done in the same manner, and will not be repeated herein. If a non-SBFD slot/symbol is still included before next detection, power adjustment is not conducted on the non-SBFD slot/symbol. Optionally, power adjustment may include power backoff or power boosting.
Method 2: no power adjustment is conducted on any transmission.

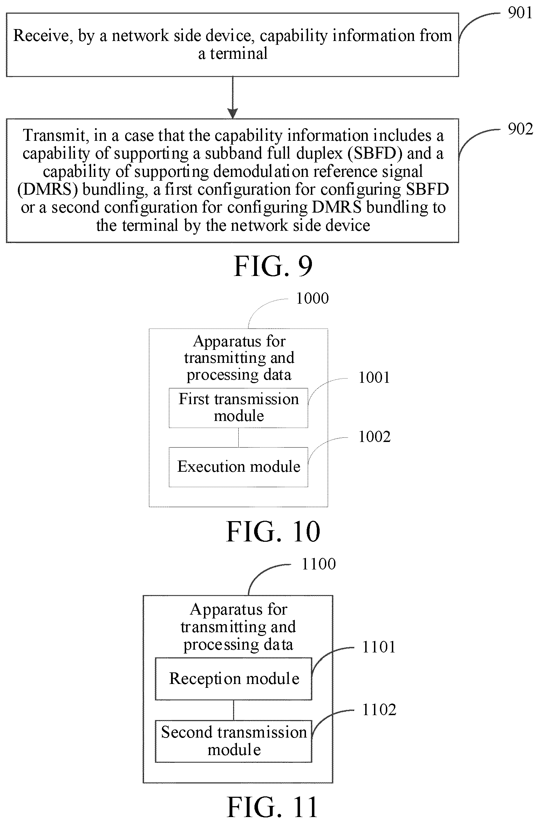

With reference to FIG. 9, an embodiment of the disclosure further provides a method for transmitting and processing data. The method includes the following steps:
Step 901, a network side device receives capability information from a terminal.
Step 902, in a case that the capability information includes a capability of supporting a subband full duplex (SBFD) and a capability of supporting demodulation reference signal (DMRS) bundling, the network side device transmits a first configuration for configuring SBFD or a second configuration for configuring DMRS bundling to the terminal.

In the embodiment of the disclosure, if the network side device transmits the first configuration, it may be understood that the network side device configures SBFD for the terminal. If a network device transmits the second configuration, it may be understood that the terminal is configured with DMRS bundling.

As the network side device configures SBFD or DMRS bundling for the terminal, the situation that SBFD operation destroys power consistency and phase continuity, resulting in DMRS bundling failure because the network side device configures both SBFD and DMRS bundling for the terminal can be avoided. Thus, the embodiment of the disclosure can improve communication reliability.

It should be understood that whether the network side device configures SBFD or DMRS bundling may be based on implementation of the network side device, or agreed by a protocol. For example, in some embodiments, the step that the network side device transmits the first configuration for configuring SBFD or the second configuration for configuring DMRS bundling to the terminal includes the following step:
the network side device transmits the first configuration for configuring SBFD or the second configuration for configuring DMRS bundling to the terminal based on a configuration transmission rule agreed by a protocol.

An execution body of the method for transmitting and processing data according to the embodiment of the disclosure may be an apparatus for transmitting and processing data. In the embodiment of the disclosure, the apparatus for transmitting and processing data according to the embodiment of the disclosure is illustrated by using the apparatus for transmitting and processing data to execute the method for transmitting and processing data as an example.

With reference to FIG. 10, an embodiment of the disclosure further provides an apparatus for transmitting and processing data. As shown in FIG. 10, the apparatus 1000 for transmitting and processing data includes:
a first transmission module 1001 configured to transmit capability information to a network side device; and
an execution module 1002 configured to execute a first behavior in a case that the capability information includes a capability of supporting a subband full duplex (SBFD) and a capability of supporting demodulation reference signal (DMRS) bundling.

The first behavior includes any one of the following:
the terminal does not expect that the network side device configures both SBFD and DMRS bundling;
in a case that the terminal is configured with both SBFD and DMRS bundling, the at least two uplink consecutive time units include the first time unit and the second time unit, and the first time unit and the second time unit have different first uplink transmission parameters, the first time unit is used as the event that destroys power consistency and phase continuity, and the actual time domain window in the first nominal time domain window of the first transmission is determined; and
in a case that the terminal is configured with both SBFD and DMRS bundling, and the first time unit and the second time unit have different first uplink transmission parameters, the terminal does not expect that the at least two consecutive time units applying DMRS bundling include both the first time unit and the second time unit.

The first nominal time domain window includes the first time unit and the second time unit. The first time unit is a time unit configured with an SBFD. The second time unit is a time unit not configured with SBFD. The first uplink transmission parameters include at least one of power and a spatial relation.

Optionally, the first transmission includes at least one of the following:
physical uplink shared channel (PUSCH) repetition type A scheduled by downlink control information (DCI);
PUSCH repetition type A with a configured grant;
PUSCH repetition type B;
a transport block transmitted in at least two slots; and
physical uplink control channel (PUCCH) repetition.

Optionally, in a case that the terminal is configured with SBFD, the apparatus 1000 for transmitting and processing data further includes:
a determination module configured to determine a second behavior. The second behavior includes any one of the following:
a power adjustment operation is executed based on first detection in a first time period; and
no power adjustment is conducted based on first detection in a first time period.

The first detection is used to determine a power level of an interference. The first time period includes only the first time unit.

Optionally, a position of the first detection satisfies at least one of the following conditions:
the first detection is located before a first allocated first resource, and alternatively, the first detection is located before a first actually used first resource;
the first detection is located before a primary second nominal time domain window of the first transmission, or before a primary first actual time domain window of the first transmission;
the first detection is located before a first resource allocated in a primary second nominal time domain window of the first transmission, or before a first resource allocated in a primary first actual time domain window of the first transmission;
the first detection is located before each second nominal time domain window of the first transmission, or before each first actual time domain window of the first transmission; and
the first detection is located before a first resource allocated in each second nominal time domain window of the first transmission, or before a first resource allocated in each first actual time domain window of the first transmission.

The first actual time domain window is an actual time domain window including the first time unit. The first actual time domain window is located in the first time period. The first resource is a resource of the first transmission. The second nominal time domain window is located in the first time period.

Optionally, the first time period is located between the two adjacent first detection, and includes only a first actual window and/or the second nominal time domain window.

Optionally, the time unit includes at least one of the following: at least one slot and at least one symbol.

With reference to FIG. 11, an embodiment of the disclosure further provides an apparatus for transmitting and processing data. As shown in FIG. 11, the apparatus 1100 for transmitting and processing data includes:
a reception module 1101 configured to receive capability information from a terminal; and
a second transmission module 1102 configured to transmit, in a case that the capability information includes a capability of supporting a subband full duplex (SBFD) and a capability of supporting demodulation reference signal (DMRS) bundling, a first configuration for configuring SBFD or a second configuration for configuring DMRS bundling to the terminal.

Optionally, the second transmission module is specifically configured to: transmit the first configuration for configuring SBFD or the second configuration for configuring DMRS bundling to the terminal based on a configuration transmission rule agreed by a protocol.

The apparatus for transmitting and processing data in the embodiment of the disclosure may be an electronic device, and for example, an electronic device having an operating system, or may be a component in an electronic device, and for example, an integrated circuit or a chip. The electronic device may be a terminal, or may be another device other than a terminal. For example, the terminal may include, but is not limited to, types of the terminal 11 listed above. Another device may be a server, a network attached storage (NAS), etc., and is not specifically limited by the embodiment of the disclosure.

The apparatus for transmitting and processing data according to the embodiment of the disclosure can implement all processes implemented in the method embodiments of FIG. 2 to FIG. 9, and achieve same technical effects. To avoid repetition, details will not be repeated herein.

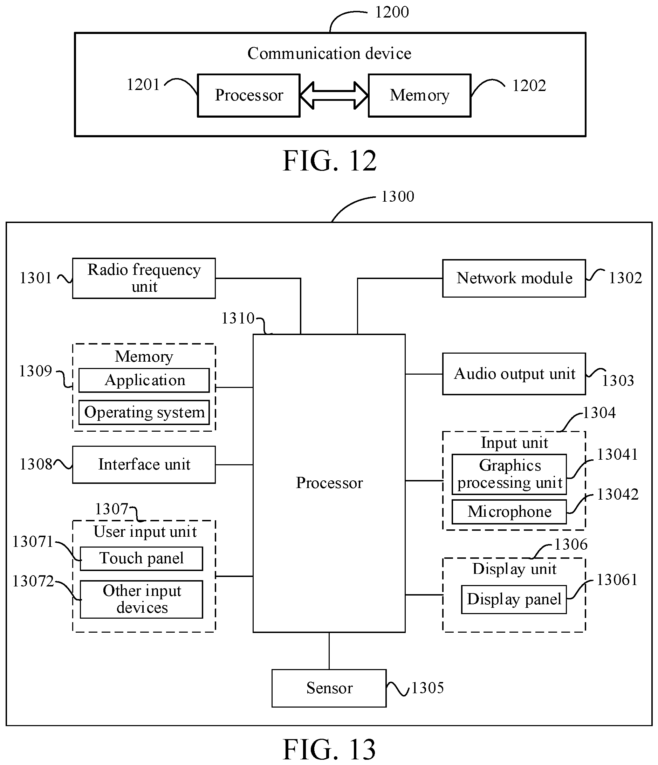

Optionally, as shown in FIG. 12, an embodiment of the disclosure further provides a communication device 1200. The communication device includes a processor 1201 and a memory 1202. The memory 1202 stores a program or an instruction runnable on the processor 1201. When the program or the instruction is executed by the processor 1201, all steps of the embodiment of the method for transmitting and processing data are implemented, and same technical effects can be achieved. To avoid repetition, details will not be repeated herein.

An embodiment of the disclosure further provides a terminal. The terminal includes a processor and a communication interface. The communication interface is configured to transmit capability information to a network side device. The processor is configured to execute a first behavior in a case that the capability information includes a capability of supporting a subband full duplex (SBFD) and a capability of supporting demodulation reference signal (DMRS) bundling. The first behavior includes any one of the following: a terminal does not expect that the network side device configures both SBFD and DMRS bundling; in a case that the terminal is configured with both SBFD and DMRS bundling, at least two uplink consecutive time units include a first time unit and a second time unit, and the first time unit and the second time unit have different first uplink transmission parameters, the first time unit is used as an event that destroys power consistency and phase continuity, and an actual time domain window in a first nominal time domain window of first transmission is determined; and in a case that the terminal is configured with both SBFD and DMRS bundling, and the first time unit and the second time unit have different first uplink transmission parameters, the terminal does not expect that at least two consecutive time units applying DMRS bundling include both the first time unit and the second time unit. The first nominal time domain window includes the first time unit and the second time unit. The first time unit is a time unit configured with an SBFD. The second time unit is a time unit not configured with SBFD. The first uplink transmission parameters include at least one of power and a spatial relation. The embodiment of the terminal corresponds to the embodiment of a terminal side method described above. All implementation processes and implementations of the method embodiment may be applied to the embodiment of the terminal, and can achieve same technical effects. Specifically, FIG. 13 is a schematic diagram of a hardware structure of a terminal for implementing an example of the disclosure.

The terminal 1300 includes, but is not limited to: at least some of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Those skilled in the art can understand that the terminal 1300 may further include a power supply (for example, a battery) for supplying power to all components, and the power supply may be logically connected to the processor 1310 through a power management system, such that functions such as charging, discharging, and power consumption management are achieved through the power management system. A terminal structure shown in FIG. 13 does not limit the terminal. The terminal may include more or fewer components than those shown in the figure, combine some components, or have different component arrangements, which will not be repeated herein.

It should be understood that, in the embodiment of the disclosure, the input unit 1304 may include a graphics processing unit (GPU) 13041 and a microphone 13042. The graphics processing unit 13041 processes image data of a static picture or a video obtained by an image capture apparatus (for example, a camera) in a video capture mode or an image capture mode. The display unit 1306 may include a display panel 13061. The display panel 13061 may be configured in a form of a liquid crystal display, an organic light-emitting diode, etc. The user input unit 1307 includes a touch panel 13071 and at least one of other input devices 13072. The touch panel 13071 is also referred to as a touchscreen. The touch panel 13071 may include two parts: a touch detection apparatus and a touch controller. The other input devices 13072 may include, but are not limited to, a physical keyboard, a functional key (for example, a volume control key or a switch key), a track ball, a mouse, and a joystick, which will not be repeated herein.

In the embodiment of the disclosure, after the radio frequency unit 1301 receives downlink data from a network side device, the data may be transmitted to the processor 1310 for processing. In addition, the radio frequency unit 1301 may transmit uplink data to the network side device. Generally, the radio frequency unit 1301 includes, but is not limited to, an antenna, an amplifier, a transceiver, a coupler, a low noise amplifier, a duplexer, etc.

The memory 1309 may be configured to store a software program or instruction and various data. The memory 1309 may mainly include a first storage zone for storing the program or the instruction and a second storage zone for storing data. The first storage zone may store an operating system, an application or an instruction required by at least one function (for example, a sound playback function and an image display function), etc. In addition, the memory 1309 may be a volatile memory or a non-volatile memory, or the memory 1309 may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 1309 in the embodiment of the disclosure includes, but is not limited to, the memories and any other suitable types of memories.

The processor 1310 may include one or more processing units. Optionally, the processor 1310 integrates an application processor and a modem processor. The application processor mainly processes operations relating to an operating system, a user interface, an application, etc., and the modem processor, such as a baseband processor, mainly processes a radio communication signal. It may be understood that the modem processor may either not be integrated into the processor 1310.

The radio frequency unit 1301 is configured to transmit capability information to the network side device.

The processor 1310 is configured to execute a first behavior in a case that the capability information includes a capability of supporting a subband full duplex (SBFD) and a capability of supporting demodulation reference signal (DMRS) bundling.

The first behavior includes any one of the following:
a terminal does not expect that the network side device configures both SBFD and DMRS bundling;
in a case that the terminal is configured with both SBFD and DMRS bundling, at least two uplink consecutive time units include a first time unit and a second time unit, and the first time unit and the second time unit have different first uplink transmission parameters, the first time unit is used as an event that destroys power consistency and phase continuity, and an actual time domain window in a first nominal time domain window of first transmission is determined; and
in a case that the terminal is configured with both SBFD and DMRS bundling, and the first time unit and the second time unit have different first uplink transmission parameters, the terminal does not expect that at least two consecutive time units applying DMRS bundling include both the first time unit and the second time unit.

The first nominal time domain window includes the first time unit and the second time unit. The first time unit is a time unit configured with SBFD. The second time unit is a time unit not configured with SBFD. The first uplink transmission parameters include at least one of power and a spatial relation.

An embodiment of the disclosure further provides a network side device. The network side device includes a processor and a communication interface. The communication interface is configured to receive capability information from a terminal; and transmit, in a case that the capability information includes a capability of supporting a subband full duplex (SBFD) and a capability of supporting demodulation reference signal (DMRS) bundling, a first configuration for configuring SBFD or a second configuration for configuring DMRS bundling to the terminal. The embodiment of the network side device corresponds to the method embodiment of the network side device. Various implementation processes and implementations of the method embodiment may be all applied to the embodiment of the network side device and can achieve same technical effects.

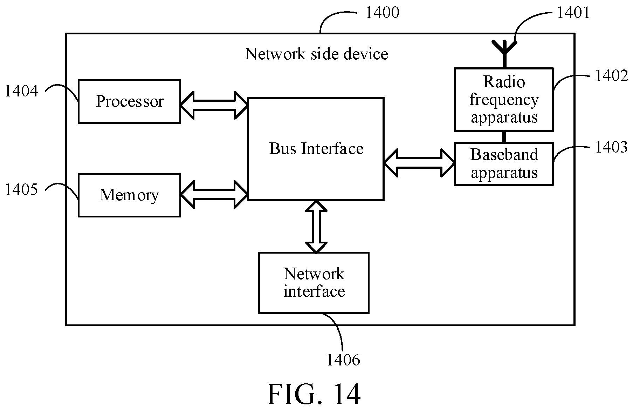

Specifically, an embodiment of the disclosure further provides a network side device. As shown in FIG. 14, the network side device 1400 includes: an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information through the antenna 1401, and transmits the received information to the baseband apparatus 1403 for processing. In a downlink direction, the baseband apparatus 1403 processes to-be-transmitted information, and transmits the information to the radio frequency apparatus 1402. The radio frequency apparatus 1402 processes the received information and then transmits the information through the antenna 1401.

In the embodiment, the method executed by the network side device may be implemented in the baseband apparatus 1403. The baseband apparatus 1403 includes a baseband processor.

The baseband apparatus 1403 may include, for example, at least one baseband board. The baseband board is provided with a plurality of chips. As shown in FIG. 14, one of the chips is a baseband processor for example, and is connected to the memory 1405 through a bus interface, such that a program in the memory 1405 is invoked to execute operations of a network device shown in the method embodiment.

The network side device may further include a network interface 1406. The interface is, for example, a common public radio interface (CPRI).

Specifically, the network side device 1400 of the embodiment of the disclosure further includes: an instruction or a program stored in the memory 1405 and runnable on the processor 1404. The processor 1404 invokes the instruction or the program in the memory 1405 to execute the method executed by each module shown in FIG. 11, and achieves a same technical effect. To avoid repetition, details will not be repeated herein.

An embodiment of the disclosure further provides a readable storage medium. The readable storage medium stores a program or an instruction. When the program or the instruction is executed by a processor, all processes of the embodiment of the method for transmitting and processing data are implemented, and same technical effects can be achieved. To avoid repetition, details will not be repeated herein.

The processor is a processor of the terminal of the embodiment. The readable storage medium includes a computer-readable storage medium, such as a computer read-only memory (ROM), a random access memory (RAM), a magnetic disk, or an optical disk.

An embodiment of the disclosure further provides a chip. The chip includes a processor and a communication interface. The communication interface is coupled to the processor. The processor is configured to run a program or an instruction, such that all processes of the embodiment of the method for transmitting and processing data are implemented, and same technical effects can be achieved. To avoid repetition, details will not be repeated herein.

It should be understood that the chip mentioned in the embodiment of the disclosure may alternatively be referred to as a system on a chip, a system chip, a chip system, a system-on-chip, etc.

An embodiment of the disclosure further provides a computer program/program product. The computer program/program product is stored in a storage medium. The computer program/program product is executed by at least one processor, such that all processes of the embodiment of the method for transmitting and processing data are implemented, and same technical effects can be achieved. To avoid repetition, details will not be repeated herein.

An embodiment of the disclosure further provides a communication system. The communication system includes: a terminal and a network side device. The terminal is configured to execute all processes in FIG. 2 and all method embodiments of the terminal. The network side device is configured to execute all processes in FIG. 9 and all method embodiments of the network side device, and can achieve a same technical effect. To avoid repetition, details will not be repeated herein.

It should be noted that terms "include", "comprise", "involve", or their any other variations herein are intended to cover non-exclusive inclusions, such that a process, a method, an article, or an apparatus including a series of elements not only includes those elements, but also includes other elements that are not explicitly listed, or also includes inherent elements of the process, the method, the article, or the apparatus. Without more restrictions, the elements defined by the sentence "including a ..." or "comprising a" do not exclude existence of other identical elements in the process, the method, the article, or the apparatus including the elements. In addition, it should be noted that a range of the method and the apparatus in an implementation of the disclosure is not limited to execution of functions in order shown or discussed, and may further include execution of functions involved in a substantially simultaneous manner or in reverse order. For example, the method described may be executed in order different from that described, and various steps may be added, omitted, or combined. Moreover, features described with reference to some examples may be combined in other examples.

From description of the implementation, those skilled in the art may clearly understand that the methods of the embodiments may be implemented by means of software plus a necessary general-purpose hardware platform, or by means of hardware. In many cases, the former is a better implementation. With such understanding, the technical solution of the disclosure, in essence or from the view of part contributing to the related art, may be embodied in a form of a computer software product. The computer software product is stored in a storage medium (such as an ROM/RAM, a magnetic disk, and an optical disk) and includes several instructions configured to execute the method according to each embodiment of the disclosure by a terminal (which may be a mobile phone, a computer, a server, an air conditioner, a network device, etc.).

The embodiments of the disclosure are described above with reference to the accompanying drawings, but the disclosure is not limited to the above specific implementations. The specific implementations are merely illustrative rather than restrictive. Inspired by the disclosure, those of ordinary skill in the art may still make many forms without departing from the essence of the disclosure and the protection scope of the claims, which all fall within protection of the disclosure.

## Claims

1. A method for transmitting and processing data, comprising:
transmitting, by a terminal, capability information to a network side device; and
executing a first behavior by the terminal in a case that the capability information comprises a capability of supporting a subband full duplex (SBFD) and a capability of supporting demodulation reference signal (DMRS) bundling, wherein
the first behavior comprises any one of the following:
the terminal does not expect that the network side device configures both SBFD and DMRS bundling;
in a case that the terminal is configured with both SBFD and DMRS bundling, at least two uplink consecutive time units comprise a first time unit and a second time unit, and the first time unit and the second time unit have different first uplink transmission parameters, the first time unit is used as an event that destroys power consistency and phase continuity, and an actual time domain window in a first nominal time domain window of first transmission is determined; and
in a case that the terminal is configured with both SBFD and DMRS bundling, and the first time unit and the second time unit have different first uplink transmission parameters, the terminal does not expect that at least two consecutive time units applying DMRS bundling comprise both the first time unit and the second time unit,
wherein the first nominal time domain window comprises the first time unit and the second time unit, the first time unit is a time unit configured with SBFD, the second time unit is a time unit not configured with SBFD, and the first uplink transmission parameters comprise at least one of power and a spatial relation.

2. The method according to claim 1, wherein the first transmission comprises at least one of the following:
physical uplink shared channel (PUSCH) repetition type A scheduled by downlink control information (DCI);
PUSCH repetition type A with a configured grant;
PUSCH repetition type B;
a transport block transmitted in at least two slots; and
physical uplink control channel (PUCCH) repetition.

3. The method according to claim 1, wherein in a case that the terminal is configured with SBFD, the method further comprises:
executing a second behavior by the terminal, wherein the second behavior comprises any one of the following:
a power adjustment operation is executed based on first detection in a first time period; and
no power adjustment is conducted based on first detection in a first time period,
wherein the first detection is used to determine a power level of an interference, and the first time period comprises only the first time unit.

4. The method according to claim 3, wherein a position of the first detection satisfies at least one of the following conditions:
the first detection is located before a first allocated first resource, and alternatively, the first detection is located before a first actually used first resource;
the first detection is located before a primary second nominal time domain window of the first transmission, or before a primary first actual time domain window of the first transmission;
the first detection is located before a first resource allocated in a primary second nominal time domain window of the first transmission, or before a first resource allocated in a primary first actual time domain window of the first transmission;
the first detection is located before each second nominal time domain window of the first transmission, or before each first actual time domain window of the first transmission; and
the first detection is located before a first resource allocated in each second nominal time domain window of the first transmission, or before a first resource allocated in each first actual time domain window of the first transmission, wherein
the first actual time domain window is an actual time domain window comprising the first time unit, the first actual time domain window is located in the first time period, the first resource is a resource of the first transmission, and the second nominal time domain window is located in the first time period.

5. The method according to claim 4, wherein the first time period is located between the two adjacent first detection, and comprises only the first actual window and/or the second nominal time domain window.

6. The method according to any one of claims 1 to 5, wherein the time unit comprises at least one of the following: at least one slot and at least one symbol.

7. A method for transmitting and processing data, comprising:
receiving, by a network side device, capability information from a terminal; and
transmitting, in a case that the capability information comprises a capability of supporting a subband full duplex (SBFD) and a capability of supporting demodulation reference signal (DMRS) bundling, a first configuration for configuring SBFD or a second configuration for configuring DMRS bundling to the terminal by the network side device.

8. The method according to claim 7, wherein the transmitting a first configuration for configuring SBFD or a second configuration for configuring DMRS bundling to the terminal by the network side device comprises:
the network side device transmits the first configuration for configuring SBFD or the second configuration for configuring DMRS bundling to the terminal based on a configuration transmission rule agreed by a protocol.

9. An apparatus for transmitting and processing data, comprising:
a first transmission module configured to transmit capability information to a network side device; and
an execution module configured to execute a first behavior in a case that the capability information comprises a capability of supporting a subband full duplex (SBFD) and a capability of supporting demodulation reference signal (DMRS) bundling, wherein
the first behavior comprises any one of the following:
a terminal does not expect that the network side device configures both SBFD and DMRS bundling;
in a case that the terminal is configured with both SBFD and DMRS bundling, at least two uplink consecutive time units comprise a first time unit and a second time unit, and the first time unit and the second time unit have different first uplink transmission parameters, the first time unit is used as an event that destroys power consistency and phase continuity, and an actual time domain window in a first nominal time domain window of first transmission is determined; and
in a case that the terminal is configured with both SBFD and DMRS bundling, and the first time unit and the second time unit have different first uplink transmission parameters, the terminal does not expect that at least two consecutive time units applying DMRS bundling comprise both the first time unit and the second time unit, wherein
the first nominal time domain window comprises the first time unit and the second time unit, the first time unit is a time unit configured with SBFD, the second time unit is a time unit not configured with SBFD, and the first uplink transmission parameters comprise at least one of power and a spatial relation.

10. The apparatus according to claim 9, wherein the first transmission comprises at least one of the following:
physical uplink shared channel (PUSCH) repetition type A scheduled by downlink control information (DCI);
PUSCH repetition type A with a configured grant;
PUSCH repetition type B;
a transport block transmitted in at least two slots; and
physical uplink control channel (PUCCH) repetition.

11. The apparatus according to claim 9, wherein in a case that the terminal is configured with SBFD, the apparatus for transmitting and processing data further comprises:
a determination module configured to execute a second behavior, wherein the second behavior comprises any one of the following:
a power adjustment operation is executed based on first detection in a first time period; and
no power adjustment is conducted based on first detection in a first time period, wherein
the first detection is used to determine a power level of an interference, and the first time period comprises only the first time unit.

12. The apparatus according to claim 11, wherein a position of the first detection satisfies at least one of the following conditions:
the first detection is located before a first allocated first resource, and alternatively, the first detection is located before a first actually used first resource;
the first detection is located before a primary second nominal time domain window of the first transmission, or before a primary first actual time domain window of the first transmission;
the first detection is located before a first resource allocated in a primary second nominal time domain window of the first transmission, or before a first resource allocated in a primary first actual time domain window of the first transmission;
the first detection is located before each second nominal time domain window of the first transmission, or before each first actual time domain window of the first transmission; and
the first detection is located before a first resource allocated in each second nominal time domain window of the first transmission, or before a first resource allocated in each first actual time domain window of the first transmission, wherein
the first actual time domain window is an actual time domain window comprising the first time unit, the first actual time domain window is located in the first time period, the first resource is a resource of the first transmission, and the second nominal time domain window is located in the first time period.

13. An apparatus for transmitting and processing data, comprising:
a reception module configured to receive capability information from a terminal; and
a second transmission module configured to transmit, in a case that the capability information comprises a capability of supporting a subband full duplex (SBFD) and a capability of supporting demodulation reference signal (DMRS) bundling, a first configuration for configuring SBFD or a second configuration for configuring DMRS bundling to the terminal.

14. The apparatus according to claim 13, wherein the second transmission module is further configured to: transmit the first configuration for configuring SBFD or the second configuration for configuring DMRS bundling to the terminal based on a configuration transmission rule agreed by a protocol.

15. A terminal, comprising a processor and a memory, wherein the memory stores a program or an instruction runnable on the processor, and when the program or the instruction is executed by the processor, steps of the method for transmitting and processing data according to any one of claims 1 to 6 are implemented.

16. A network side device, comprising a processor and a memory, wherein the memory stores a program or an instruction runnable on the processor, and when the program or the instruction is executed by the processor, steps of the method for transmitting and processing data according to either of claims 7 to 8 are implemented.

17. A communication system, comprising a terminal and a network side device, wherein the terminal is configured to execute steps of the method for transmitting and processing data according to any one of claims 1 to 6, and the network side device is configured to execute steps of the method for transmitting and processing data according to either of claims 7 to 8.

18. A readable storage medium, storing a program or an instruction, wherein when the program or the instruction is executed by a processor, steps of the method for transmitting and processing data according to any one of claims 1 to 6 are implemented, and alternatively, when the program or the instruction is executed by a processor, steps of the method for transmitting and processing data according to either of claims 7 to 8 are implemented.

19. A chip, comprising a processor and a communication interface, wherein the communication interface is coupled to the processor, and the processor is configured to run a program or an instruction, such that steps of the method for transmitting and processing data according to any one of claims 1 to 6 are implemented, and alternatively, steps of the method for transmitting and processing data according to either of claims 7 to 8 are implemented.

20. A computer program/program product, stored in a non-transitory storage medium, wherein the computer program/program product is executed by at least one processor, such that steps of the method for transmitting and processing data according to any one of claims 1 to 6 are implemented, and alternatively, steps of the method for transmitting and processing data according to either of claims 7 to 8 are implemented.
